# EUROPEAN PATENT APPLICATION

(11) **EP 3 575 934 A1**
(43) Date of publication of application: **04.12.2019**
(21) Application number: 19176700.3
(22) Date of filing: 27.05.2019
(51) Int. Cl.: G06F 3/0354, G06F 3/0362

(54) **CONTROL DEVICE AND METHOD OF OPERATION THEREOF**

(30) Priority: 31.05.2018 TW 107118646
(71) Applicant: Fersgo Co., Ltd., New Taipei City 238 (TW); Nien, Cheng-Yang, New Taipei City 238 (TW)
(72) Inventor: Nien, Cheng-Yang, New Taipei City 238 (TW)
(74) Representative: Wittmann, Günther

(57) **Abstract**

A control device is disclosed, which comprises a supporting body, a touch module, a casing, and a touch button. The touch module is set inside of supporting body, and the casing rotatably and slidably covers the supporting body. The present invention provides an intuitive and personal operation of the cursor, which makes the operation much easier. Methods of operation of the control device are also disclosed, which comprise the translation, the rotation, and the press of the casing for instructions of the cursor.

## Description

### TECHNICAL FIELD

The present invention relates to a control device and method of operation thereof.

### BACKGROUND OF RELATED ARTS

According to the popularization of mobile phones and tablets, the technology of touch interface has developed rapidly. The advantage of touch technology lies in that the position of finger touch overlaps the position of perceived vision, forming a sense of coordination between operation and vision. Nowadays, most users are accustomed to operating and controlling these devices in this intuitive touch mode.

On the contrary, personal computers are mostly operated by mouse, trackball or touch pad/panel. Although the mouse is quite convenient to use, it is controlled by one-handed left-right asymmetry and has a wide range of movement. When it needs to be used for a long time, it often causes a burden on the wrist, arms, back and shoulder neck, and even easily causes carpal tunnel syndrome, shoulder-neck problems, etc. It is quite harmful to the health of workers who use computers. Although use of the track ball does not need to lift the wrist and not easy to cause carpal tunnel syndrome, its asymmetric use may also cause shoulder, neck and back injury, and its intuition in use is not as good as touch pad or touch panel. Although use of the touch pad will not cause the above problems, its operation is not very convenient which often need several sliding operations before the cursor is moved to the target position.

Although the operation of personal computer has the above problems, it still has many advantages that cannot be replaced by tablets, such as high performance and convenience of typing, therefore the market position of personal computers can not be replaced by tablets. This advantage is the reason why many technicians who need to work for a long time need to rely on personal computers to perform their work. How to provide a convenient, intuitive and not easy to harm health control method has become an issue problem to be discussed.

### SUMMARY

To resolve the drawbacks of the prior arts, the present invention discloses a control device and method of operation thereof.

The present invention provides a control device, comprising: a lower cover; a circuit board configured on the lower cover; a shell disposed on the circuit board, wherein the shell has an operation area; a rolling auxiliary module located outside of the shell and connected with the shell; a sensing control module configured on the operation area or under an upper cover and connected with the circuit board; a casing with tubular shape which may slidably or rollably cover the rolling auxiliary module and the operating area of the shell; an upper cover disposed on the casing, wherein the upper cover has an opening, and the opening coincides with at least one part of the operating area such that a user contacts the casing through the opening.

The present invention further provides an operation method of a control device, comprising performing at least one the following steps or the combination thereof:
S1: a translation action, a casing is sliding along one center axis of vertical or horizontal direction of the casing;
S2: a rolling action, the casing is rolling as the center axis of the casing;
S3: a first click action, pressing a left key;
S4: a second click action, pressing a right key;
S5: a pressing action, pressing the casing; and
S6: touching a touch button and performing a gesture action on the casing.

Embodiments of the invention are illustrated by way of example, and not by way of limitation, in the figures of the accompanying drawings in which like reference numerals refer to similar elements.

### BRIEF DESCRIPTION OF THE DRAWINGS

FIG. 1 illustrates a schematic diagram of the structure of a control device according to one embodiment of the present invention.
FIG. 2 illustrates a schematic diagram of partial mechanical action of the control device according to one embodiment of the present invention.
FIG. 3 illustrates a schematic diagram of partial mechanical action of the control device according to one embodiment of the present invention.
FIG. 4 illustrates a schematic diagram of partial mechanism of the control device according to one embodiment of the present invention.
FIG. 5 illustrates an exploded drawing of the structure of the control device according to one embodiment of the present invention.
FIG. 6 illustrates the control device of the present invention.
FIG. 7 illustrates a casing of the control device of the present invention.
FIG. 8 illustrates a side view of the casing of the control device of the present invention.
FIG. 9 illustrates a schematic diagram of a mechanical operation of the control device according to one embodiment of the present invention.
FIG. 10 illustrates a flow chart of the operation method of the control device of an embodiment of the present invention.

### DETAILED DESCRIPTION OF THE INVENTION

In order to understand the technical features and practical efficacy of the present invention and to implement it in accordance with the contents of the specification, hereinafter, preferred embodiments of the present invention will be described in detail with reference to the accompanying drawings.

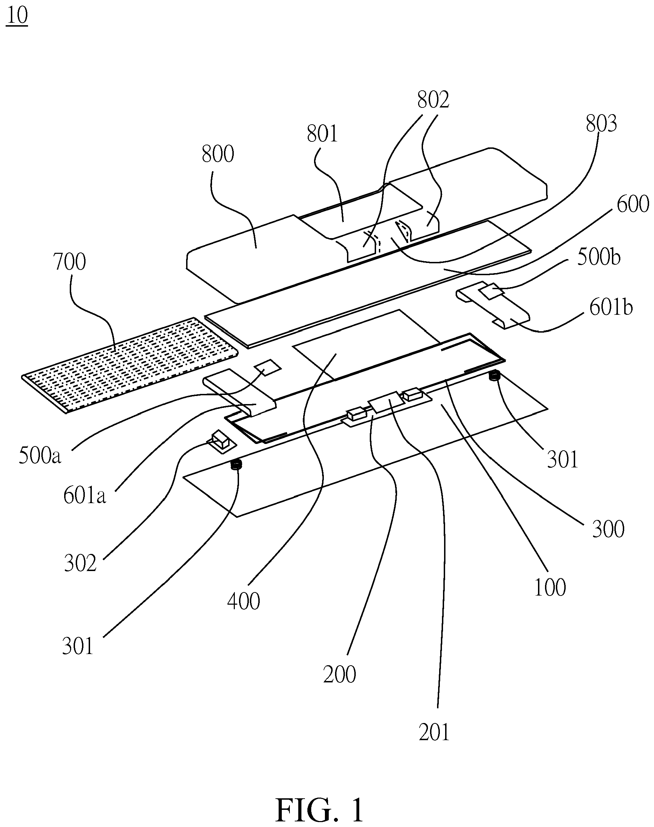

Referring to FIG. 1, it illustrates a schematic diagram of the structure of a control device according to one embodiment of the present invention. As shown in FIG. 1, a control device 10 of the present invention includes: a lower cover 100; a circuit board 200, configured on/above the lower cover 100; a shell 600, disposed on/above the circuit board 200, in which the shell 600 contains an operation area; a rolling auxiliary module 603, located outside of the shell 600 and connected with the shell 600; a sensing control module 400, located in/on the operation area or disposed under an upper cover 800, and the sensing control module 400 is connected with the circuit board 200; a casing 700 with tubular shape which may slidably or rollably covers the rolling auxiliary module 603 and the operating area of the shell 600; an upper cover 800, disposed on/above the casing 700; and an opening 801, arranged on the upper cover 800, a first projection of the opening 801 on a horizontal plane coincides with a second projection of the operating area on the horizontal plane, which a user contacts the casing 700 through the opening 801.

In one embodiment of the invention, a user operates the casing 700 through the opening 801 to make the casing move. The casing 700 is arranged on the shell 600, and the casing 700 can be rolling or scrolling on the shell 600, and moving or sliding on the shell 600. In another embodiment, the direction of rolling or scrolling of the casing 700 is the front and back direction of the user, while the direction of translation of the casing 700 is the left and right direction of the user. However, the two modes of moving of the casing can also be left and right rolling and front and back translation. In some embodiments of the present invention, the operational intuition of user is provided by rolling touch of the casing 700, and a control of cursor is actually achieved by the finger action sensed by the sensing control module 400. In other embodiments of the present invention, the casing 700 can be connected with a displacement sensing unit as one of the multi-segment instructions of the cursor control, and the displacement sensing unit is also connected with the circuit board 200. Thereby, the moving mode, moving speed (rolling speed, translation speed) and moving distance (rolling distance, translation distance) of the casing 700 can be detected by the displacement sensing unit. The displacement sensing unit can be an optical sensing element, a magnetic sensing element, an ultrasonic sensing element, etc. For example, as the displacement sensing unit is a magnetic sensing element, the casing 700 is made of conductive material, or a metal material, such as metal dot array, is partially arranged on the casing 700. In another embodiment of the present invention, only part of the casing contains metal material which is far away from the sensing control module 400 to avoid noise signal caused by the capacitive touch control module 400 due to the metal material.

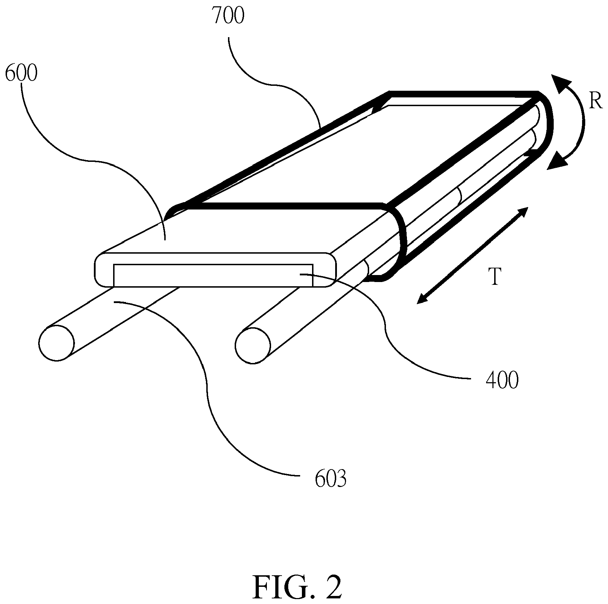

In one embodiment of the invention, the control device 10 further includes a first micro-controller connected to the circuit board 200, and the sensing control module 400 further includes a second micro-controller connected to the first micro-controller. The first micro-controller and the second micro-controller are supported for the control operation and high-speed operation of the elements such as touch interface, Hall element or capacitive element. The first micro-controller and the second micro-controller also need to process signals of the sensing control module 400 and the keys or buttons, compute for the above signals, using the algorithm to match the casing 700 with the movement parameter of finger simulating the situation of user. In other embodiments of the present invention, the first microcontroller is connected to a sensing module or a displacement sensing element and the compatible first microcontroller is used to process the movement parameters of the casing 700 or a rolling auxiliary module 603 (shown in FIG. 2).

Referring to FIG. 2, it shows a diagram of partial mechanical action of the control device according to one embodiment of the present invention. As shown in FIG. 2, the casing 700 has an elliptical cylindrical shape, covering the rolling auxiliary module 603 and the shell 600, so that the rolling auxiliary module 603 and the shell 600 are located in the hollow portion of the casing 700. In some embodiments of the present invention, the rolling auxiliary module 603 includes a plurality of rolling rods with cylindrical shape. In this embodiment, the rolling auxiliary module 603 is two long cylindrical rollers. The long cylindrical rollers can be rolling along with the rolling of the casing to help the casing moving. Any mechanism design with the assistance of rolling of the casing 700 is covered within the scope of the present invention. In some embodiments, the rolling auxiliary module 603 is connected with a displacement sensing unit which is connected to the circuit board 200, by which the rolling speed, rolling range or rotating angle of the rolling auxiliary module 603 can be detected. The displacement sensing unit can be an optical sensor, an electromagnetic sensor, an ultrasonic sensor, etc. For example, the displacement sensor is a magnetic sensor, and the rolling auxiliary module 603 can contain a conductive material. In other embodiments of the invention, the rolling auxiliary module 603 includes a Teflon tape, which is arranged on the inner side of the casing 700 and covers with the shell 600. According to the low friction surface of the Teflon tape, when it is regarded as a medium placed between the shell 600 and the casing 700, helping the casing 700 to roll smoothly.

Please see the FIG. 1 and FIG. 2 simultaneously. As can be seen from FIG. 1, the upper cover 800 includes a left key 802a connected to the circuit board 200; a right key 802b set on the right side of the left key 802a and also connected to the circuit board 200; and a touch button 803 set on the middle area between the left key 802a and the right key 802b. The circuit board 200 includes a touch panel 201 connected to the touch button 803. In one embodiment of the present invention, the function of the left key 802a and right key 802b is the same as that of the left key and right key of mouse. In other embodiments, pressing the left key 802a corresponds to a first click instruction, pressing the right key 802b corresponds to a second click instruction, and the first click instruction and the second click instruction are user-defined instructions.

As can be seen from FIG. 2, the casing 700 can be rolling or scrolling along the rolling direction R, translating along the direction T. Rolling and translating action can provide a user with intuition to move the cursor left, right, up and down. In fact, the instructions (or commands) of moving the cursor left, right, up and down are issued based-on or by the sensing control module 400 to sense the movement of the user's finger. In addition, the shell 600 has an operation area, and the opening 801 corresponds to the operation area. The area below the casing 700 that can be touched through the opening is the operation area. The sensing control module 400 is set in the operation area and connected to circuit board 200. When the touch button 803 on the upper cover is activated by touching of the user, the control instruction will be stopped, and the control device will be switched to only perform one gesture action (described in Table 1). In other possible implementations, when the touch button 803 is not activated and the sensing control module 400 senses a touch instruction of the user, the displacement sensing element or sensing module senses that the casing 700 is not moving, it will not enter the aforementioned gesture control mode. Instead, the control device will still move the cursor left, right, up and down according to the touch instruction of the user.

In one embodiment of the invention, the sensing control module 400 is a resistive touch module, a capacitive touch module, an optical touch module or a surface acoustic wave touch module. When the control device of the invention includes a first micro-controller and a second micro-controller, the second micro-controller needs to support the operation of the sensing control module 400. The sensing control module 400 senses a movement of finger on the casing 700, and transmits this movement parameter to the second microcontroller for operation. The movement parameter is computed by the second micro-controller to obtain data transmitted to the first micro-controller. The next order integrated computing based-on the above data and operation data of the touch button 803 is performed by the first micro-controller, and the integrated data parameter is used for controlling cursor movement or custom instruction. When the sensing control module 400 is an optical touch module, an optical sensing module and an optical sensing circuit board 606 is arranged between the upper cover 800 and the casing 700. The optical sensing module is connected with the optical sensing circuit board 606, while the optical sensing circuit board 606 is connected with the first micro-controller. The optical sensing module can be a plurality of sensing signal transmitters 604 and sensing signal receivers 605 individually located on the two opposite sides of the casing 700. The sensing signal transmitters 604 emit an optical network close to the top of the casing 700. When the user operates the casing 700 to control the cursor, the optical network will be blocked. The sensing signal receivers 605 read the blocked signal and calculate the movement of the cursor. In the preferred embodiment of the present invention, the optical touch module is an infrared touch module and the optical sensing module is an infrared sensing module. In some embodiments, the sensing control module 400 includes a potential energy generator, which generates an electric field with a sensing range of 0-20 centimeter (cm). The user can operate the sensing control module 400 without touching the casing 700.

In one preferred embodiment of the present invention, the control device includes a keyboard and a recording key. The keyboard and the recording key are connected with the circuit board 200. The user can record an instruction of a shortcut key by pressing and holding the recording key, and pressing some corresponding shortcut keys on the keyboard at the same time, and store the instruction of shortcut key in the first click instruction and the second click instruction. Based-on the configuration of the recording key, the left key 802a and the right key 802b can be used as shortcut keys. In another preferred embodiment of the present invention, the user can record a multi-point touch instruction or a cursor track by simultaneously pressing and holding the recording key and the touch button 803 and sliding the finger on the casing 700, and store them in the first and second click instructions for the user to use. The recording function of the invention can also record an automatic operation instruction by the combination of the above. Generally, the persons skilled in the art should understand that any simple equivalent changes and modifications are still within the scope of the invention, not limited to this description.

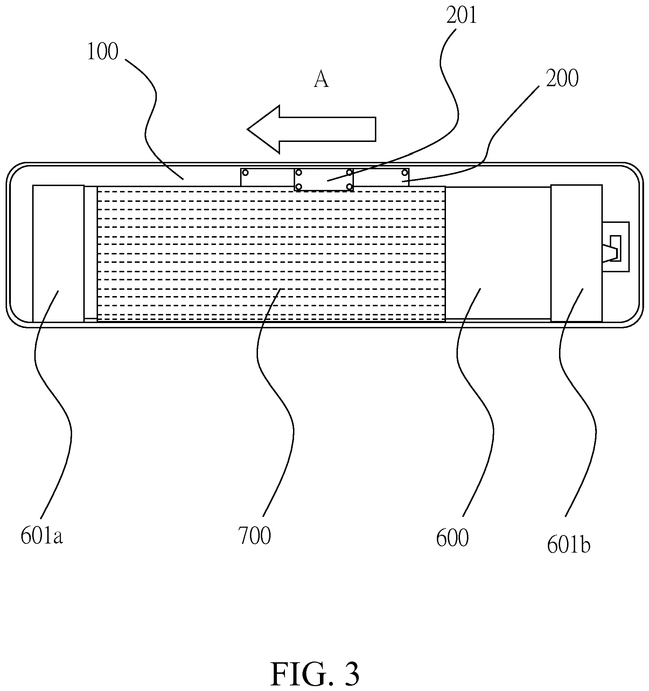

Referring to FIG. 3, it illustrates a diagram of partial mechanical action of the control device according to one embodiment of the present invention. As shown in Fig. 3, a circuit board 200 is arranged on/above the lower cover 100 of the present embodiment, and the circuit board 200 includes a touch panel 201. The above of the circuit board 200 is provided with a shell 600 and a casing 700. The left side of the shell 600 is provided with a left end cover 601a of the shell, and the right side of the shell 600 is provided with a right end cover 601b of the shell. In the present embodiment, the touch panel 201 is arranged above the circuit board 200, and its position corresponds to the below of the touch button 803 on the upper cover 800. In some embodiments, the touch panel 201 is attached with the touch button 803. In other embodiments of the invention, the touch button 803 can be a capacitive switch, a micro switch, a touch switch or a thin film switch. As can be seen in Figure 3, the casing 700 can translate along the direction A of the shell 600.

In one embodiment of the present invention, the control device comprises a left end-point sensor 500a set on the left side of the shell 600 and a right end-point sensor 500b set on the right side of the shell. The left end-point sensor 500a and the right end-point sensor 500b are a piezoelectric inductor, a magnetic inductor, an ultrasonic inductor, an optical inductor, a mechanical switch, a mechanical button, a mechanical contact spring or the combination thereof. In the preferred example, the left end-point sensor 500a is installed on the left end cover 601a of the shell 600, and the right end-point sensor 500b is installed on the right end cover 601b of the shell 600. In a preferred embodiment, the left end-point sensor 500a and the right end-point sensor 500b are ultrasonic sensors or infrared sensors. When the casing 700 moves to the left end cover 601a of the shell 600, a signal at the left end-point sensor 500a will be blocked. The left blocked signal corresponds to an instruction of moving the cursor to the left edge of the screen. When the casing 700 moves to the right end cover 601b of the shell, a signal at the right end-point sensor 500b will be blocked. The right blocked signal corresponds to an instruction of moving the cursor to the right edge of the screen. The left and right blocked signals also provide a parameter to the first microcontroller, which serves as a computational basis for the user's action and simulation.

In other embodiments of the present invention, the control device includes a homing module, which is set at the left and right ends of the shell 600. When the user operates the casing 700 for left-right translating, the casing 700 will push the homing module to make the homing module move correspondingly, and touch the left end-point sensor 500a or the right end-point sensor 500b, or block the signal of the left end-point sensor 500a or the right end-point sensor 500b, such that the cursor is homed correspondingly to the left or right edge of the screen. When the left end-point sensor 500a and the right end-point sensor 500b are a mechanical switch (micro switch, touch switch or thin film switch), a mechanical button, a mechanical contact spring or the combination thereof, the homing module is moved correspondingly with the movement of the casing 700, and the left end-point sensor 500a or the right end-point sensor 500b is touched, so that the cursor is homed correspondingly to the left or right edge of the screen. When the left end-point sensor 500a and the right end-point sensor 500b are are piezoelectric sensors, magnetic sensors, ultrasonic sensors or optical sensors, the left end-point sensor 500a or the right end-point sensor 500b senses a displacement signal of the homing module, and the cursor is positioned to the left or right edge of the screen. In some other embodiments of the present invention, the homing module is a swinging mechanism member arranged at the left and right ends of the shell. The translation of the homing module will cause to press the homing module and correspondingly move the cursor to the left or right edge of the screen.

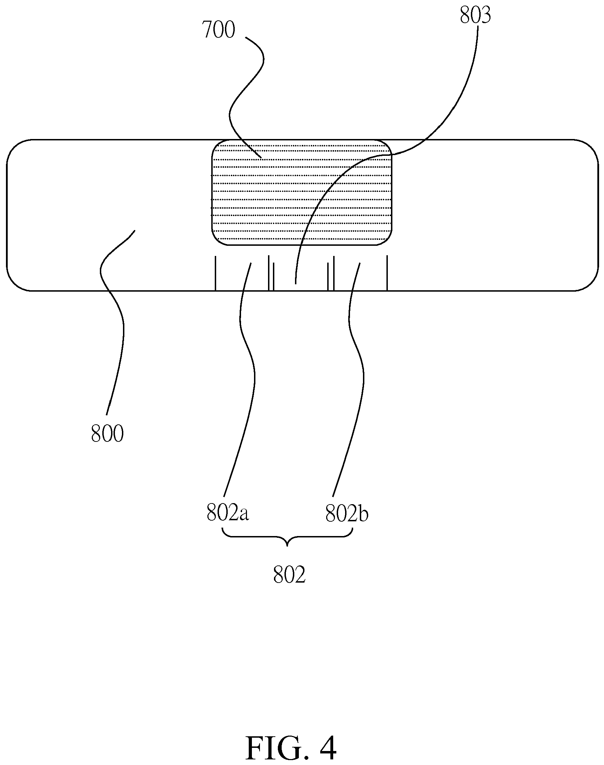

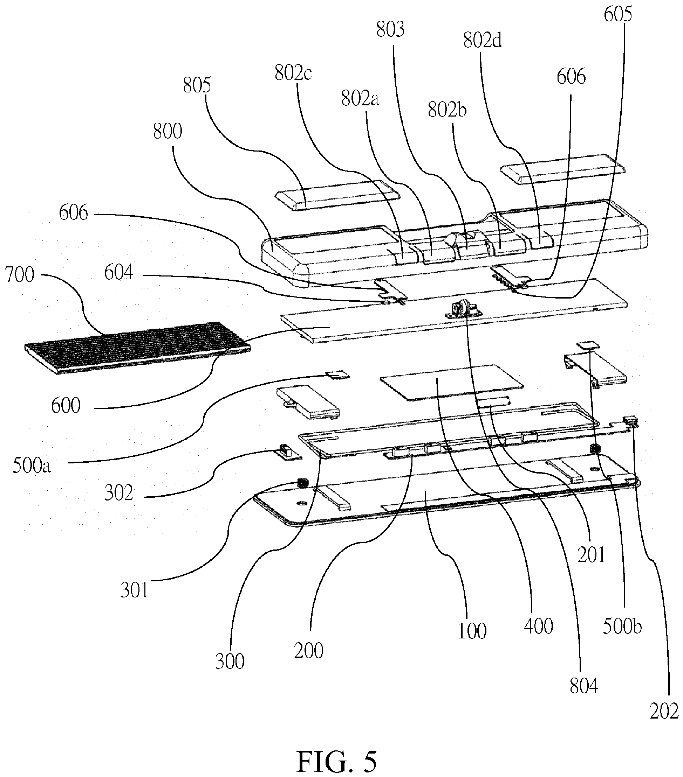

Referring to FIG. 4, it illustrates a schematic diagram of partial mechanism of the control device according to one embodiment of the present invention. As shown in the figure, the opening 801 of the upper cover 800 is located above the casing 700, through which the user can perform the operations of translating, rolling and sliding finger for the casing 700. Referring to FIG. 4 and FIG. 5, in another embodiment, the upper cover 800 is provided with a plurality of support pads 805, which can be used to support the wrist of the user. The support pad 805 can be made of elastic silica gel, latex or a package of rubber with plastic particles or liquid to provide operational comfort. In one preferred example, two support pads 805 are installed on the upper cover 800 of the control device, for respectively supporting the user's left and right wrists.

Referring to FIG. 5, it illustrates an exploded drawing of the structure of the control device according to one embodiment of the present invention. As can be seen from the figure, the control device of the present embodiment includes: a lower cover 100; a circuit board 200, configured above the lower cover 100; a shell 600, located above the circuit board 200, in which the shell 600 has an operation area; a rolling auxiliary module 603, located outside the shell and connected with the shell; and a sensing control module 400, located on the operation area or below the upper cover 800 connected with the circuit board 200; a casing 700 with tubular shape which can be sliding or rolling to cover the rolling auxiliary module 603 and the operating area of the shell 600; an upper cover 800 set above the casing 700; and an opening 801 located in the upper cover 800, wherein a first projection area of the opening 801 at a horizontal plane coincides with a second projection area of the operating area at the horizontal plane, which a user can contact the casing 700 through the opening 80.

In this embodiment, the sensing control module 400 is an optical touch control module, which includes an optical sensing module configure between the upper cover 800 and the casing 700. The optical sensing module includes a plurality of sensing signal transmitter 604 and a plurality of sensing signal receivers 605. The plurality of sensing signal transmitter 604 and a plurality of sensing signal receivers 605 are set at the opposite side of the casing 700. The optical sensing circuit boards 606 are connected with the optical sensing module and the first microcontroller respectively.

In another embodiment of the invention, an interface connector 202 is arranged on the control device and connected to the circuit board 200, and a wireless module can be detachably connected to the interface connector 202. When the control device connects to the wireless module through the connector 202, the wireless module is activated, and the control device transmits and receives signals to/from a personal computer through the wireless module. When the control device senses an unconnected signal from the connector 202, the wireless module is turned off and the control device wirelessly communicates with the personal computer. The wireless module is a Bluetooth module or a wireless radio frequency module. When the control device senses that the interface connector 202 is connected to the wireless module, the wireless module is started. The control device communicates with the personal computer by means of Bluetooth or wireless radio frequency signals. The interface connector 202 includes but not limited to a Universal Serial Bus (USB) port, a Type-C USB port, a micro-USB port or a Lightning port. In some embodiments, the control device includes a roller module 804, through which the user can perform an additional custom operation.

Referring to FIG. 5, it shows a schematic diagram of the control device according to one embodiment of the present invention. As can be seen from FIG. 5, the upper cover 800 includes a left key 802a and a first function key 802c, and the left key 802a and the first function key 802c are connected to the circuit board 200; a right key 802b and a second function key 802d arranged on the right side of the left key 802a, and the right key 802b and the second function key 802d are also connected to the circuit board; and a touch button 803 set between the left key 802a and the right key 802b. The circuit board 200 includes a touch panel (or touch keyboard) 201 connected with the touch button 803. In one embodiment of the present invention, the left key 802a and the right key 802b have the same function as the left and right keys of the mouse. In other embodiments, pressing the first and second function key 802c and 802d corresponds to two user-defined instructions, respectively.

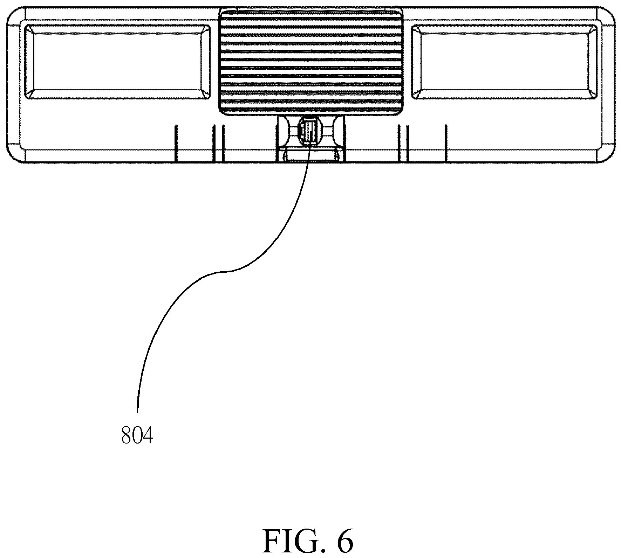

As can be seen in FIG. 6, the control device in the present embodiment includes a roller module 804 connected to the circuit board 200 and the first microcontroller. The roller module 804 is set on the shell 600, and the upper cover 800 is provided with a hole arranged above the roller module 804 to facilitate the user controlling the roller module 804 for use of user-defined instructions.

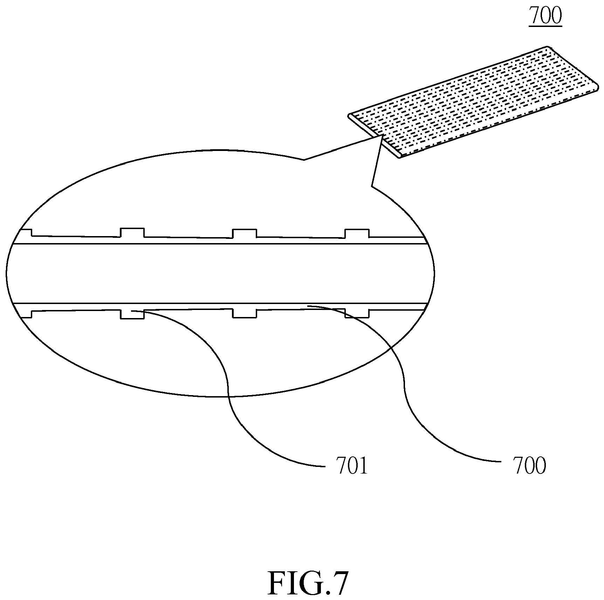

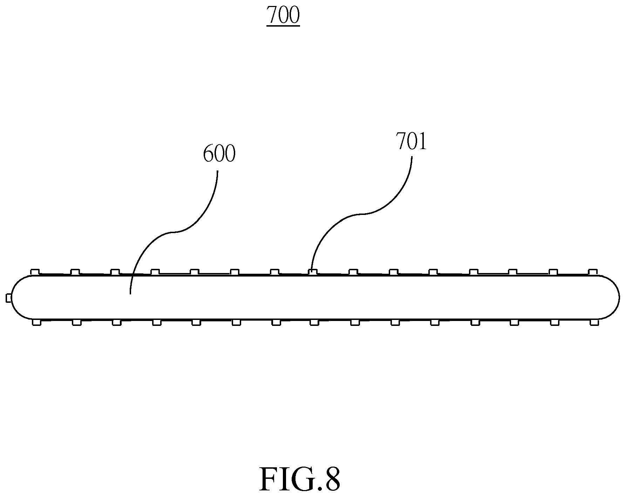

Referring to FIG. 7 and FIG. 8 in the same time, they illustrate schematic diagrams of a partial member of the control device according to two embodiments of the present invention. In the present embodiment, the casing 700 is a soft casing, which is made of a low elastic fabric, a silica gel, a polymer membrane, a transparent material or the combination thereof. The casing 700 is provided with a plurality of support material 701. In some embodiments, the casing 700 and the support material 701 are integrally formed. The use of support material 701 in this embodiment is to fix the shape of the casing 700 in rolling or translation. A material of the support material 701 may be hard glue or hard engineering plastics. In some embodiments, the support material 701 is hard glue and attaches with the casing 700. In other embodiments, the support material 701 includes a plurality of hard engineering plastics, which are attached with the casing 700 through glue. The shape of the support material 701 is a long strip parallelly set on the casing 700 along its translation direction of the casing 700. In some embodiments, the support material 701 is integrally formed on the casing 700. In other embodiments, a surface treatment layer is formed on the casing 700 and the support material 701 to enhance the overall friction to provide a sense of operation.

In another embodiment of the invention, the support material 701 on the casing 700 is long strip colloids arranged in parallel, and the strip colloid has a height of 0.3 to 0.5 millimeter (mm), a width of 1 to 2 mm, and a spacing of 10 mm. These long strip colloids are made by dispensing or spraying, with an additional surface treatment layer of about 0.1 mm thickness. The surface treatment layer has the characteristics of low resilience and high friction coefficient.

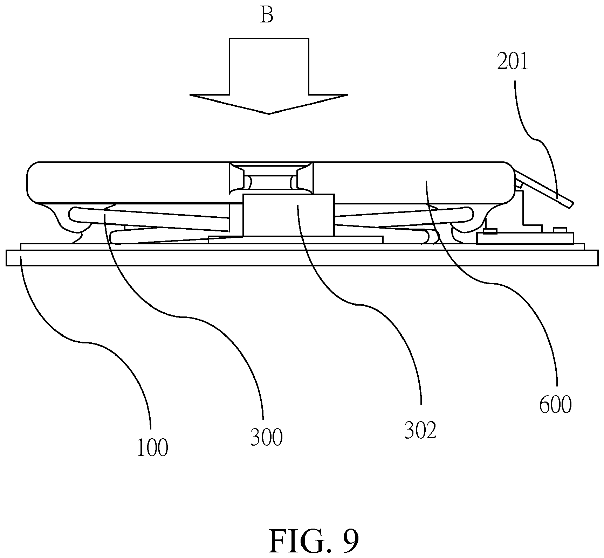

Referring to FIG. 9, it shows a schematic diagram of a mechanical operation of the control device according to one embodiment of the present invention. The control device of the present embodiment includes a support module comprising a plurality of elastic elements 301 and a plurality of supporting members 300. The support module is capable of pressing to connect the shell 600 and the lower cover 100, and a pressure sensor 302 is connected to the support module. In some embodiments, the pressure sensor 302 is a mechanical key. In other embodiments, the user can directly press the casing 700 to perform the function of the left key of mouse based-on the pressure sensor 302. The implementations of the support member 300 can be designed for the U-shape spring as shown in FIG. 7 or other mechanism that can achieve the elastic support function. In addition, the elastic component 301 and the support member 300 can be used alternatively. The implementations of the support module are not limited to the above description.

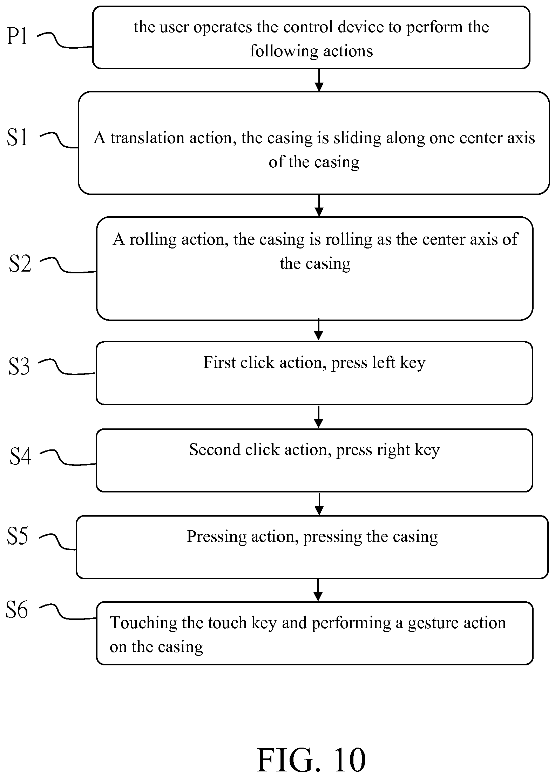

Referring to FIG. 10, it illustrates a flow chart of the operation method of the control device of an embodiment of the present invention. The operation method of the control device of the present embodiment includes a preparation step PI: the user operates the control device of the present invention and performs the following actions or the combinations of the following actions:
S1: A translation action, the casing 700 is sliding along one center axis of transverse or longitudinal direction of the casing 700;
S2: A rolling action, the casing 700 is rolling as the center axis of the casing 700;
S3: First click action, press left key 802a;
S4: Second click action, press right key 802b;
S5: Pressing action, pressing the casing 700; and
S6: Touching the touch button 803 and performing a gesture action on the casing 700.

In some embodiments, the user repeatedly executes the steps of S1, S2, S3, and S4 in any order; left and right translation of the casing 700 activates left and right movement of the cursor, rolling of the casing 700 activates up and down movement of the cursor, pressing the left key 802a and pressing the right key 802b. In other embodiments, the user repeatedly executes the steps of S1, S2, S3 and S4 in any order; up and down translation of the casing 700 activates up and down movement of the cursor, rolling of the casing 700 activates left and right movement of the cursor, pressing the left key 802a and pressing the right key 802b. In other embodiments, the user repeatedly executes the steps of S1, S2, S3 and S4 and simultaneously executes S5, pressing the casing 700 to drag an object selected by the cursor. In other embodiments, the user repeatedly executes S1, S2, S3, S4 and S5, and repeatedly executes moving the cursor up, down, left and right and clicking.

In some embodiments, the user slides a finger on the casing 700 to perform a track action, so that the sensing control module 400 senses finger movement, but the sensing module or the displacement sensing element does not sense movement of the sleeve 700 and makes the cursor move along this track. In some embodiments, the user repeatedly executes the steps of S1, S2, S3, S4, S5 and S6 in any order to operate the cursor. Preferably, the translation action and the rolling action of the casing 700 make the cursor move quickly, the track action of S6 make the cursor move slowly and more precisely, and the first microcontroller operates the switching between S1, S2 and S6 to make the movement of the cursor fit with the use situation of the touch panel and the user's control of the cursor close to intuition. In addition, the user can execute S3 and S6 at the same time, and drag the selected object by the cursor.

In another embodiment, the user performs the step of S6, touching the touch button 803, and performs a gesture action on the casing 700. The gesture action includes a finger sliding action which the user slides one finger or fingers on the casing 700 to make the casing 700 translate, roll or the combination thereof, and a pressing action. The user touches the touch button 803 and performs a gesture action on the casing 700, which corresponds to a multi-touch function. Table 1 provides a usage scenario for multi-touch in an embodiment, including a user touching touch button 803 and performing gesture actions as shown in the table 1.

**Table 1: multi-touch mode of the control device**

| Gesture actions | Instruction | |
|---|---|---|
| | Microsoft system | iOS system |
| Horizontal sliding of two fingers (The casing correspondingly translating left and right) | Scrolling | Page switching, Window switching |
| Pressing action by two fingers | Right-click menu | Right-click menu, smart zoom, query data detector |
| Single finger (or two fingers) sliding to the upper right corner (The casing correspondingly moving to the upper right corner) | Magnification | Magnification |
| Single finger (or two fingers) sliding to the lower left corner (The casing correspondingly moving to the lower left corner) | Reduction | Reduction |
| Rotating and sliding of two fingers clockwise or counterclockwise (The casing correspondingly moving clockwise or counterclockwise) | None | Rotating object |

In other embodiments, the operation method of the control device includes a step of S7: a distance gesture is executed within the sensing range above the casing 700, which includes an upward displacement action, a downward displacement action, a turning action, a drawing circle action and a wave action.

The embodiments described above only provide a concise description of the operation method of the control device of the present invention, and the user can also arrange and combine the steps of the above embodiments. The operation method of the control device of the present invention is not limited to the above mentioned.

The control device and operation method of the invention provide a mechanism design suitable for long-term use and not easy to cause harm to the user's health, and provide an intuitive use situation. The user controls the cursor by moving and rolling of the casing, which is not only easy to control, but also can know the operation status by feedback of the casing movement, and can adjust according to own requirements. The shortcut keys and other user custom designs makes the operation of personal computer more convenient, more adaptable to personal work demands, and greatly reduces the complexity of operation.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure. While the preferred embodiment of the invention has been illustrated and described, it will be appreciated that various changes can be made therein without departing from the spirit and scope of the invention.

## Claims

1. A control device, comprising:
a lower cover;
a circuit board configured on said lower cover;
a shell disposed on said circuit board, wherein said shell has an operation area;
a rolling auxiliary module located outside of said shell and connected with said shell;
a sensing control module configured on said operation area or under an upper cover, the sensing control module is connected with said circuit board;
a casing with tubular shape which slidably or rollably cover said rolling auxiliary module and said operating area of said shell;
an upper cover disposed on said casing, wherein said upper cover has an opening, and
said opening coincides with at least one part of said operating area such that a user contacts the casing through said opening.

2. The control device of claim 1, wherein said rolling auxiliary module includes a plurality of cylindrical rolling rods.

3. The control device of claim 1, wherein said rolling auxiliary module includes a Teflon tape arranged on an inner side of said casing and covers with said shell.

4. The control device of claim 1, further comprising a first microcontroller connected to said circuit board, and said sensing control module includes a second microcontroller connected to said first microcontroller.

5. The control device of claim 1, wherein said upper cover includes:
a left key connected to said circuit board;
a right key set on a right side of said left key and connected to said circuit board;
at least one function key adjacent to said left key or said right key and connected to said circuit board; and
a touch button set on an area between said left key and said right key;
wherein said circuit board includes a touch panel connected to said touch button.

6. The control device of claim 1, further comprising:
a left end-point sensor configured on a left side of said shell; and
a right end-point sensor configured on a right side of said shell;
wherein said left end-point sensor and said right end-point sensor are a piezoelectric inductor, a magnetic inductor, an ultrasonic inductor, an optical inductor, a mechanical switch, a mechanical button, a mechanical contact spring or the combination thereof.

7. The control device of claim 1, wherein said sensing control module is a resistive touch module, a capacitive touch module, an optical touch module or a surface acoustic wave touch module.

8. The control device of claim 1, wherein said sensing control module is an optical touch control module, wherein said sensing control module includes:
an optical sensing module configure between said upper cover and said casing,
wherein said optical sensing module includes a plurality of sensing signal transmitter and a plurality of sensing signal receivers; and
said optical sensing circuit boards connected with said optical sensing module and
said first microcontroller respectively.

9. The control device of claim 1, wherein casing is a soft casing, which is made of a low elastic fabric, a silica gel, a polymer membrane, a transparent material or the combination thereof; and said casing is provided with a plurality of support material.

10. The control device of claim 9, wherein said support material includes a plurality of hard plastics.

11. The control device of claim 1, further comprising an interface connector arranged on the control device; and a wireless module detachably connected to said interface connector.

12. The control device of claim 11, wherein said wireless module includes a Bluetooth module or a wireless radio frequency module.

13. The control device of claim 1, further comprising a support module having a plurality of elastic elements and a plurality of supporting members, wherein said support module is capable of pressing to connect said shell and said lower cover, and a sensor, which is activated by pressure, connected to said support module.

14. The control device of claim 1, further comprising a potential energy generator, which generates an electric field with a sensing range of 0-20 centimeter.

15. An operation method of said control device according to claim 1, comprising performing at least one the following steps:
S1: a translation action, said casing is sliding along one center axis of vertical or horizontal direction of said casing;
S2: a rolling action, said casing is rolling as said center axis of said casing;
S3: a first click action, pressing a left key;
S4: a second click action, pressing a right key;
S5: a pressing action, pressing said casing; and
S6: touching a touch button and performing a gesture action on said casing.

16. The operation method of claim 15, wherein said gesture action includes a finger sliding action which a user slides one finger or fingers on said casing to make said casing translate, roll or the combination thereof, and a pressing action.

17. The operation method of claim 15, further comprising a step of S7: performing a distance gesture within said sensing range above said casing.
